# EUROPEAN PATENT SPECIFICATION

(11) **EP 2 419 327 B1**
(45) Date of publication and mention of the grant of the patent: **22.06.2016**
(21) Application number: 10764730.7
(22) Date of filing: 09.04.2010
(51) Int. Cl.: B64C 21/10, B64C 21/02, F15D 1/12, B05D 5/08, B05D 1/42

(54) **PROCEDURE TO MAKE A FRICTION-REDUCING SURFACE STRUCTURE**
VERFAHREN ZUR HERSTELLUNG EINER REIBUNGSREDUZIERENDEN OBERFLÄCHENSTRUKTUR
PROCÉDURE POUR RÉALISER UNE STRUCTURE DE SURFACE DE RÉDUCTION DE FROTTEMENT

(30) Priority: 16.04.2009 WO PCT/SE2009/000192; 14.10.2009 SE 0901319
(43) Date of publication of application: 22.02.2012
(73) Proprietor: Winberg, Ragnar, 254 58 Helsingborg (SE)
(72) Inventor: Winberg, Ragnar, 254 58 Helsingborg (SE)
(86) International application number: PCT/SE2010/000091
(87) International publication number: WO 2010/120224

(56) References cited:
- WO-A1-2007/036349
- DE-A1-102007 012 440
- JP-A- 10 166 498
- US-A- 4 650 138
- US-A- 5 069 403
- US-A1- 2002 190 416

## Description

It is known since long that an entirely smooth surface gives a somewhat greater friction against a medium streaming past it than a surface which has a special microstructure.

The purpose of this invention is, in a simple way and at a low cost, to make a surface layer, which somewhat reduces the friction between for example an aircraft or a vessel and its surrounding medium.

While flying at a constant altitude it is only the air resistance that requires energy in the form of fuel consumption. Even if much energy is required to reach the intended altitude, it is yet long-distance flying, flying at a constant altitude, that requires the most fuel. Since also an insignificant reduction of the air resistance of an aircraft can result in fuel saving, it can motivate a somewhat higher cost when painting an aircraft. Even if the atmospheric pressure is low at the flying altitudes used by passenger planes, the speed is often about 250 metres per second. For aircraft there is no alternative to liquid fuels which emit carbon dioxide. IPPC (Integrated Pollution Prevention and Control) states according to LFV's web page that air traffic today is responsible for about two per cent of the global outlets of carbon dioxide and that the share of outlet of carbon dioxide of aviation can increase to about three per cent in 2050.

In the patent journal WO2007/036349A1, for example, several procedures are described, where the surface of a varnish layer is formed by pressing a stamping tool straight against the surface of the varnish when the varnish is formable or a cylinder with a negative impression in motion is pressed against the varnish surface. The surface will then get a structure corresponding to that of the cylinder. In these cases the tool or the cylinder are in contact with the varnish for a very short time and it is important that the stamping does not take place too early since the surface pattern can deteriorate. Nor must it take place so late that the varnish has hardened too much and is not possible to stamp or that a very hard pressure must be applied for the wanted pattern stamping to result.

In the article "The first JAS 39 Gripen has been blasted and lightning-modified with new technology", Försvarsmakten 26 June 2003, the need of lightning protection on aircraft whose exterior parts consist of composite material is described. On these aircraft a thin aluminium foil is first applied in a known way and then paint is applied without being finished.

For big vessels the cost of fuel is very high. A small reduction of the friction against the water can therefore be important through saving fuel at the same time as the letting out of carbon dioxide can be reduced.

Also on other surfaces a friction-reducing surface structure can be suitable.

The present invention has the special characteristics which are evident from the patent claims.

According to the procedure a cylinder is first made whose surface layer has a special structure through the removing of material so that depressions are formed in the surface through one of several known methods, for instance as at cylinders for photo gravure.

With the use of a cylinder according to the text above a plastic foil is stamped of for instance polythene during its production so that one side remains plane while the surface against the cylinder gets a structure quite opposite to that of the cylinder, since the plastic penetrates into the depressions of the cylinder. This foil can be produced or cut into strips of a suitable breadth, for instance 200 millimetres. A strip can be rolled up on a roll and have a length of for instance 100 metres. A suitable thickness can be 0.2 millimetres.

When a surface is to be painted either for the first time or re-painted, one or more layers of paint or varnish which can harden are first applied with a sprayer, a brush or a roller. Epoxy paint is a type of two-component paint but there are also other paints which consist of a ground-colour and a hardener and do not contain solvents and can thus be suitable. The important thing is that the paint or varnish can harden under a tight foil. To this paint, after the time it takes for it to harden somewhat, a foil is gradually applied according to the above, at which the paint is pressed between the surface and the foil at which the paint penetrates into the depressions of the foil at the same time as air between the paint and the foil is pressed out. At the pressing on of the foil a tool can be used. This tool can have a roll but it can also be made in another way, for example with a formable layer of foam plastic under a stiff plate. The tool should be moved lengthwise on the foil under pressure. It may be possible on certain areas to press the foil on only with your hands even if this method normally is not so good. The foil adheres firmly enough to the paint and is to remain there. When one strip has been pressed onto the paint, the pressing on of an adjacent strip is started. It can overlap the earlier one a little. It is recommended that the foil that is pressed on is rolled onto the same tool as is used for pressing on the foil. The foil can then remain on the paint until it has hardened, which can vary in time depending, among other things, on the paint and the surrounding temperature. It can normally take 24 hours or a few days. There is paint which can harden in a very short time if it is exposed to ultraviolet light. After the paint has hardened, the foil can be split open and pulled off without any paint remaining in the depressions of the foil. Then the foil can be thrown away or used again.

The aircraft body itself of passenger planes has often a mostly cylindrical form. At the application of plastic strips lengthways a tool with a roll should be shaped in such a way and of such surface material that, when pressed in the direction of the foil, it presses evenly against the aircraft along its whole breadth. The small windows of a passenger plane do not involve an obstacle but it only means that the roll must not be pressed against the foil there.

For foil on the wings a more cylindrical roll can be used. It is not necessary that the whole surface of the aircraft gets the friction reducing surface structure. The important thing is that a large part of the surface of the aircraft will get the friction reducing surface structure.

Since air always contains more or less dust which, at the high speed of the airflow, tears on the surface, a re-paint may be justified when the structure has been torn down.

When re-painting it may be advisable to grind down the old paint so that its surface becomes smooth and without a remaining structure before new paint is applied.

A structure on aircraft can have the form of ribs separated by grooves parallel lengthways with the aircraft. The height of the ribs over adjacent grooves can be less than 0.1 millimetres and the distance between the ribs can be smaller than 0.2 millimetres. The ridges can have breaks. Also another form of structure can appear suitable to give aircraft a surface layer which reduces the friction against the surrounding air.

The corresponding procedure to make the friction-reducing surface structure on other surfaces than aircraft, e.g. vessels can be made correspondingly.

An alternative procedure can be first to apply paint to the foil so that it penetrates into the depressions of the foil and then press the foil against the smooth surface so that the foil sticks to the surface and the foil may remain on the surface until the paint has hardened and after that the foil can be pulled away without any paint remaining in its depressions.

Another alternative procedure can be first to apply paint to the foil so that it penetrates into the depressions of the foil and immediately after that wind the foil onto a roll so that the paint comes against the smooth surface of the foil and surplus paint is pressed out after which the paint can remain on the rolled-up roll until the paint has hardened. At a later occasion the surface can be provided with a thin layer of paint that can be hardened under a tight foil. After that the foil with the hardened paint can be pressed against the surface and sticks to it and remain on it until the paint on the surface has bound the paint in the depressions after which the foil can be pulled away without any paint remaining in the depressions of the foil.

Paint in this document also means paint that is transparent and has no pigment, usually called varnish. Hardenable varnish can contain a powder of various kinds which does not prevent the forming or the hardening. Of course different colours can be used on the same aircraft and be applied at different times.

## Claims

1. Procedure to make a friction-reducing surface-structure on a first surface
surrounded with a streaming medium, **characterized by the fact that** first the parts of the first surface which is to be provided with the special surface structure are painted with a paint that can be hardened under a tight foil, after which, when the paint has already begun to harden a totally tight plastic foil is applied to the first surface, the side of the foil facing the first surface having stamped surface
opposite to the one the surface shall have,
at which the foil is gradually pressed against the paint so that it enters into the depressions of the foil and air between the foil and the paint is pressed out,
and that the foil sticks to the paint and the foil may remain on the paint until it has hardened after which the foil is pulled off.

2. Procedure to make a friction-reducing surface structure on a first surface surrounded with a streaming medium, **characterized by the fact that** first a tight foil one inside of which having a stamped surface opposite to the one which the first surface is to have, is painted with a paint that can be hardened under a tight foil and after that the foil is gradually pressed against the smooth surface with the stamped painted surface facing the first surface so that the foil sticks to the first surface and is left on it until all paint has hardened after which the foil is pulled off.

3. Procedure to make a friction-reducing surface structure on a first surface,
surrounded with a streaming medium, **characterized by the fact that** first a tight foil one side of which having a stamped surface opposite to the one which the first surface is to have, is painted with a paint which can be hardened under a tight foil and that immediately thereafter the foil is wound onto a roll at which surplus paint is pressed out and the paint is left on the rolled-up roll until the paint has hardened after which the foil can be wound off the roll and gradually pressed to the first surface provided with a thin layer of paint, capable of being hard, facing the wirst surfaceith the stamped painted surface at which the foil sticks to the first surface and is
left on it until all paint has hardened after which the foil is pulled off.

4. Procedure according to any previous claim, **characterized by the fact that** the surface structure has the form of parallel ridges lying closely together with the longitudinal direction coinciding with the direction of the stream.

5. Procedure according to Claim 4, **characterized by the fact that** the ridges
have a height over adjacent grooves of less than 0.15 millimetres.

6. Procedure according to Claim 4, **characterized by the fact that** the
distance between the ridges is less than 0.2 millimetres.

7. Procedure according to Claim 4, **characterized by the fact that** the ridges
have interruptions.

8. Procedure according to any previous claim, **characterized by the fact that** the foil is plastic and in the shape of strips.

## Patentansprüche

1. Verfahren zum Herstellen einer reibungsmindernden Oberflächenstruktur auf einer ersten Fläche, die von einem strömenden Medium umgeben ist, **dadurch gekennzeichnet, dass** zuerst die Teile der ersten Fläche, die mit der speziellen Oberflächenstruktur zu versehen sind, mit einem Lack bestrichen werden, der unter einer dichten Folie ausgehärtet werden kann, wonach dann, wenn das Aushärten des Lacks bereits eingesetzt hat, eine vollständig dichte Kunststofffolie auf die erste Fläche aufgelegt wird, wobei die Seite der Folie, die auf der ersten Fläche aufliegt, eine geprägte Oberfläche aufweist, die das Gegenteil von der geprägten Oberfläche ist, welche die Fläche aufweisen soll, an welcher die Folie nach und nach gegen den Lack gepresst wird, sodass er in die Vertiefungen der Folie eindringt und die Luft zwischen der Folie und dem Lack herausgepresst wird, und dass die Folie am Lack haftet und die Folie auf dem Lack verbleiben kann, bis er ausgehärtet ist, wonach die Folie abgezogen wird.

2. Verfahren zum Herstellen einer reibungsmindernden Oberflächenstruktur auf einer ersten Fläche, die von einem strömenden Medium umgeben ist, **dadurch gekennzeichnet, dass** zuerst eine dichte Folie, von der eine Innenseite eine geprägte Oberfläche aufweist, die das Gegenteil von der geprägten Oberfläche ist, welche die erste Fläche aufweisen soll, mit einem Lack bestrichen wird, der unter einer dichten Folie ausgehärtet werden kann, und danach die Folie nach und nach gegen die glatte Oberfläche gepresst wird, wobei die bestrichene geprägte Oberfläche der ersten Fläche gegenüberliegt, sodass die Folie an der ersten Fläche haftet und auf ihr verbleibt, bis der gesamte Lack ausgehärtet ist, wonach die Folie abgezogen wird.

3. Verfahren zum Herstellen einer reibungsmindernden Oberflächenstruktur auf einer ersten Fläche, die von einem strömenden Medium umgeben ist, **dadurch gekennzeichnet, dass** zuerst eine dichte Folie, von der eine Seite eine geprägte Oberfläche aufweist, die das Gegenteil von der geprägten Oberfläche ist, welche die erste Fläche aufweisen soll, mit einem Lack bestrichen wird, der unter einer dichten Folie ausgehärtet werden kann, und dass die Folie unmittelbar danach auf eine Walze gewickelt wird, an der überflüssiger Lack herausgepresst wird und der Lack auf der umwickelten Walze verbleibt, bis der Lack ausgehärtet ist, wonach die Folie von der Walze abgewickelt werden kann und nach und nach gegen die erste Fläche gepresst wird, die mit einer dünnen Lackschicht versehen ist, die zum Aushärten in der Lage ist, wobei die erste Fläche der bestrichenen geprägten Oberfläche gegenüberliegt, an welcher die Folie an der ersten Fläche haftet und auf ihr verbleibt, bis der gesamte Lack ausgehärtet ist, wonach die Folie abgezogen wird.

4. Verfahren nach einem der vorherhergehenden Ansprüche, **dadurch gekennzeichnet, dass** die Oberflächenstruktur die Form paralleler Rippen aufweist, die in der Längsrichtung, die mit der Strömungsrichtung übereinstimmt, eng aneinander liegen.

5. Verfahren nach Anspruch 4, **dadurch gekennzeichnet, dass** die Rippen eine Höhe über danebenliegenden Rillen von weniger als 0,15 Millimetern aufweisen.

6. Verfahren nach Anspruch 4, **dadurch gekennzeichnet, dass** der Zwischenraum zwischen den Rippen kleiner als 0,2 Millimeter ist.

7. Verfahren nach Anspruch 4, **dadurch gekennzeichnet, dass** die Rippen Unterbrechungen aufweisen.

8. Verfahren nach einem der vorherhergehenden Ansprüche, **dadurch gekennzeichnet, dass** die Folie aus Kunststoff ist und die Form von Streifen hat.

## Revendications

1. Procédure de réalisation d'une structure de surface réduisant la friction sur une première surface entourée par un fluide s'écoulant, **caractérisée par le fait que** d'abord les parties de la première surface qui doit être pourvue de la structure de surface spéciale sont peintes avec une peinture qui peut être durcie sous un film étanche, après quoi, lorsque la peinture a déjà commencé à durcir, du film plastique totalement étanche est appliqué sur la première surface, la face du film tournée vers la première surface ayant une surface poinçonnée opposée à celle que la surface doit avoir et sur laquelle le film est graduellement comprimé sur la peinture de manière à rentrer dans les creux du film et à ce que l'air situé entre le film et la peinture soit expulsé et que le film colle à la peinture et que le film puisse rester sur la peinture jusqu'à ce qu'elle ait durci, après quoi le film est arraché.

2. Procédure de réalisation d'une structure de surface réduisant la friction sur une première surface entourée par un fluide s'écoulant, **caractérisée par le fait que** d'abord un film étanche dont l'intérieur comporte une surface poinçonnée opposée à celle que la première surface doit avoir est peint avec une peinture qui peut être durcie sous un film étanche et que le film est graduellement comprimé sur la surface lisse avec la surface poinçonnée peinte tournée vers la première surface de manière à ce que le film colle à la première surface et reste dessus jusqu'à ce que toute la peinture ait durci, après quoi le film est arraché.

3. Procédure de réalisation d'une structure de surface réduisant la friction sur une première surface entourée par un fluide s'écoulant, **caractérisée par le fait que** d'abord un film étanche dont une face comporte une surface poinçonnée opposée à celle que la première surface doit avoir est peint avec une peinture qui peut être durcie sous un film étanche et que, juste après, le film est enroulé sur un rouleau sur lequel un excédent de peinture est éliminé et la peinture est laissée sur le rouleau enroulé jusqu'à ce que la peinture ait durci, après quoi le film peut être arraché arraché du rouleau et graduellement comprimé sur la première surface pourvue d'une mince couche de peinture capable de durcir tournée vers la première surface avec la surface poinçonnée peinte sur laquelle le film colle sur la première surface et est laissé dessus jusqu'à ce que toute la peinture ait durci, après quoi le film est arraché.

4. Procédure selon l'une quelconque des revendications précédentes, **caractérisée par le fait que** la structure de surface a la forme de crêtes parallèles rapprochées les unes des autres dont le sens longitudinal coïncide avec le sens de l'écoulement.

5. Procédure selon la revendication 4, **caractérisée par le fait que** les crêtes ont une hauteur sur des gorges adjacentes inférieure à 0,15 millimètre.

6. Procédure selon la revendication 4, **caractérisée par le fait que** la distance entre les crêtes est inférieure à 0,2 millimètre.

7. Procédure selon la revendication 4, **caractérisée par le fait que** les crêtes présentent des interruptions.

8. Procédure selon l'une quelconque des revendications précédentes, **caractérisée par le fait que** le film est en plastique et a la forme de bandes.
